# EUROPEAN PATENT APPLICATION

(11) **EP 4 614 898 A1**
(43) Date of publication of application: **10.09.2025**
(21) Application number: 22963990.1
(22) Date of filing: 03.11.2022
(51) Int. Cl.: H04L 27/00

(54) **METHOD AND APPARATUS FOR CELL ACTIVATION OR DEACTIVATION**

(71) Applicant: FUJITSU LIMITED, Kawasaki-shi, Kanagawa 211-8588 (JP)
(72) Inventor: JIA, Meiyi, Beijing 100022 (CN); ZHANG, Jian, Beijing 100022 (CN)
(74) Representative: Haseltine Lake Kempner LLP
(86) International application number: PCT/CN2022/129691
(87) International publication number: WO 2024/092680

(57) **Abstract**

Embodiments of the present disclosure provide a method and an apparatus for cell activation or deactivation, the method includes: a terminal equipment receives a cell change command transmitted by a network device; and the terminal equipment activates or deactivates a cell indicated by or associated with the cell change command according to conditions related to cell activation or deactivation. According to the embodiments of the present disclosure, the terminal equipment activates or deactivates a cell indicated by or associated with a cell change command when receiving the cell change command, or when receiving a (enhanced) secondary cell activated or deactivated MAC CE, or according to an activation or deactivation state of a cell configured by RRC signaling, or according to an activation or deactivation state of a cell group where a cell is located configured by RRC signaling, or according to a deactivation timer, which can determine an activation or deactivation state of the cell.

## Description

### TECHNICAL FIELD

Embodiments of the present disclosure relate to the technical field of communications.

### BACKGROUND ART

In activation/deactivation of a secondary cell (SCell), if a MAC (Media Access Control) entity configures one or more secondary cells, a network may activate and deactivate the configured secondary cell(s). After a secondary cell is configured, the secondary cell is deactivated, unless an upper layer sets parameter *sCellState* of the secondary cell to be *activated.*

Currently, a configured secondary cell may be activated or deactivated in the following situations:
an SCell Activation/Deactivation MAC CE is received;
an Enhanced SCell Activation/Deactivation MAC CE is received;
each configured secondary cell is configured with a timer *sCellDeactivationTimer* (except for a secondary cell configured with a PUCCH, if any): after the timer expires, its associated secondary cell is deactivated;
each configured secondary cell is configured with *sCellState*: if the *sCellState* is configured, its associated secondary cell is activated after the secondary cell is configured;
*scg-State* is received: a secondary cell of a SCG (Secondary Cell Group) is deactivated.

In addition, for each configured secondary cell, if the secondary cell is activated, the MAC entity will perform at least one of the following processing:
not transmitting an SRS (Sounding Reference Signal) on the secondary cell;
not reporting CSI (Channel State Information) of the secondary cell;
not transmitting on an UL-SCH (Uplink Shared Channel) on the secondary cell;
not transmitting on a RACH (Random Access Channel) on the secondary cell;
not monitoring a PDCCH (Physical Downlink Control Channel) on the secondary cell;
not monitoring a PDCCH of the secondary cell;
not transmitting a PUCCH (Physical Uplink Control Channel) on the secondary cell;
aborting an ongoing random access procedure (if any) on a secondary cell when the secondary cell is deactivated.

On the other hand, for a serving cell change via L1/L2 (Layer 1/Layer 2) signaling, when a terminal moves from a coverage area of a cell to a coverage area of another cell, at a point, a serving cell change needs to be performed. Currently, the serving cell change is triggered by layer 3 (L3) measurement and completed by RRC (Radio Resource Control) signaling, a triggered reconfiguration with synchronisation is changed for a primary cell (PCell) and a primary secondary cell (PSCell), and increase of release of secondary cells (SCells) when applicable. All situations involve full L1 (and L2) resetting, resulting in longer delay, greater overhead and longer interruption duration than beam handover mobility. Goal of L1/L2 mobility enhancement is to ensure a serving cell change via L1/L2 signalling, so as to reduce delay, overhead and interruption duration.

In order to reduce a mobility delay, a mechanism and procedure of L1/L2-based inter-cell mobility include the following content:
configuration and maintenance of multiple candidate cells to allow rapid application of configuration of candidate cells;
for possible applicable scenarios, a dynamic handover mechanism between L1/L2 signaling-based candidate serving cells (including special cells and secondary cells);
L1 enhancement of inter-cell beam management, including L1 measurement and reporting, and beam indication;
timing advance management; and
CU-DU (Centralized Unit-Distributed Unit) interface signalling to support L1/L2 mobility.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background Art of the present disclosure.

### SUMMARY

The inventor finds that assume that for L1/L2 triggered mobility, trigger information is included in an MAC CE (MAC Control Element) for transmission, the MAC CE at least including an index of a candidate configuration. The candidate configuration may include a configuration of a candidate special cell and/or candidate secondary cell, to support carrier aggregation. In this situation, the L1/L2 triggered mobility requires determining an activation/deactivation state of the secondary cell. In addition, in a Dual Connectivity (DC) scenario, if applying the L1/L2 triggered mobility to a deactivated SCG is supported, an activation/deactivation state of the special cell, i.e., a primary secondary cell, needs to be further determined.

For at least one of the above problems or other similar problems, the embodiments of the present disclosure provide a method and an apparatus for cell activation or deactivation, a cell indicated by or associated with a cell change command is activated or deactivated by receiving the cell change command, or by receiving a (enhanced) secondary cell activated/deactivated MAC CE, or according to an activation or deactivation state of a cell configured by RRC signaling, or according to an activation or deactivation state of a cell group where a cell is located configured by RRC signaling, or according to a state of a deactivation timer, such that an activated / deactivated state of the cell can be determined.

According to an aspect of the embodiments of the present disclosure, an apparatus for cell activation or deactivation is provided, configured in a terminal equipment, the apparatus comprising:
a receiving unit configured to receive a cell change command transmitted by a network device; and
a processing unit configured to activate or deactivate a cell indicated by or associated with the cell change command according to conditions related to cell activation or deactivation.

According to another aspect of the embodiments of the present disclosure, an apparatus for cell activation or deactivation is provided, configured in a network device, the apparatus comprising:
a transmitting unit configured to transmit a cell change command to a terminal equipment, the cell change command being used by the terminal equipment to activate or deactivate a cell indicated by or associated with the cell change command according to conditions related to cell activation or deactivation.

One of advantageous effects of the embodiments of the present disclosure lies in: according to the embodiments of the present disclosure, the terminal equipment activates or deactivates a cell indicated by or associated with a cell change command when receiving the cell change command, or when receiving a (enhanced) secondary cell activated or deactivated MAC CE, or according to an activation or deactivation state of a cell configured by RRC signaling, or according to an activation or deactivation state of a cell group where a cell is located configured by RRC signaling, or according to a deactivation timer, which can determine an activation or deactivation state of the cell. Thereby, it is allowed to perform data transmission by using the secondary cell as soon as possible after a cell changes, thus ensuring big data communication.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a secondary cell activation/deactivation MAC CE of one octet;
FIG. 2 is a schematic diagram of a secondary cell activation/deactivation MAC CE of four octet;
FIG. 3 is a schematic diagram of an enhanced secondary cell activation/deactivation MAC CE with one octet Cᵢ field;
FIG. 4 is a schematic diagram of an enhanced secondary cell activation/deactivation MAC CE with four octet Cᵢ field;
FIG. 5 is a schematic diagram of an intra-gNB-DU L1/L2 triggered mobility procedure;
FIG. 6 is a schematic diagram of an inter-gNB-DU L1/L2 triggered mobility procedure;
FIG. 7 is a schematic diagram of scenarios involved in the embodiments of the present application;
FIG. 8 is a schematic diagram of a method for cell activation or deactivation in the embodiments of a first aspect;
FIG. 9 is a schematic diagram of an MAC CE;
FIG. 10 is a schematic diagram of a method for cell activation or deactivation in the embodiments of a second aspect;
FIG. 11 is a schematic diagram of an apparatus for cell activation or deactivation in the embodiments of a third aspect;
FIG. 12 is another schematic diagram of an apparatus for cell activation or deactivation in the embodiments of a third aspect;
FIG. 13 is a schematic diagram of a terminal equipment in the embodiments of the present disclosure;
FIG. 14 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), an Integrated Access and Backhaul (IAB) node or an IAB-DU or IAB-donor. And the term "base station" may include some or all functions of a base station, each base station may provide communication coverage to a specific geographic region. The term "cell" may refer to a base station and/or its coverage area, which depends on the context in which this term is used. In a case where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT (Mobile Terminal), a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

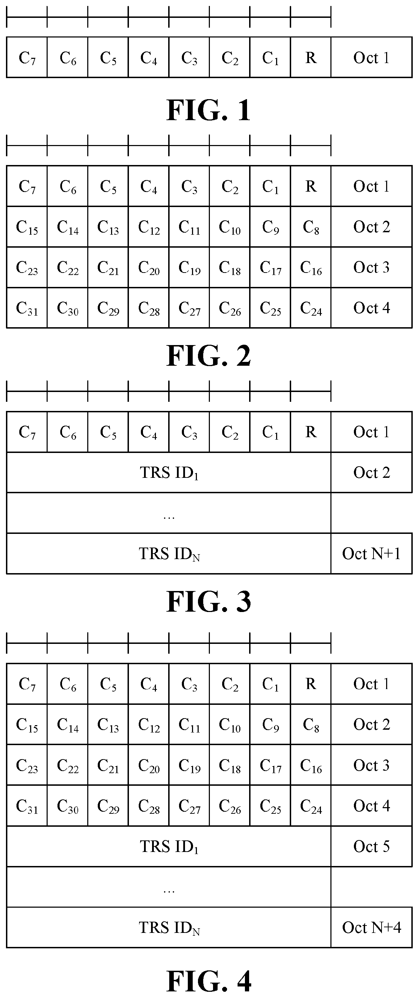

For a secondary cell activation or deactivation MAC CE:
A secondary cell (SCell) activation/deactivation MAC CE of one octet is identified by a MAC subheader with an LCID. It's size is fixed, includes a single octet, and contains seven C fields and one R field, as shown in FIG. 1.

A secondary cell (SCell) activation/deactivation MAC CE of four octet is identified by a MAC subheader with an LCID. It's size is fixed, includes four octets, and contains thirty one C fields and one R field, as shown in FIG. 2. If a MAC entity configures a secondary cell with *SCellIndex* i, a Cᵢ field indicates an activation/deactivation state of the secondary cell *SCellIndex* i configured by the MAC entity, otherwise the MAC entity will ignore the Cᵢ field. The Cᵢ field set to be 1 indicates that the secondary cell *SCellIndex* i will be activated; the Cᵢ field set to be 0 indicates that the secondary cell *SCellIndex* i will be deactivated. In addition, R is a reserved bit, its value defaults to be 0.

An enhanced secondary cell (SCell) activation/deactivation MAC CE with one octet Cᵢ field is identified by a MAC subheader with an eLCID. It's size is variable, contains seven C fields, one R field and several TRS ID fields, as shown in FIG. 3.

An enhanced secondary cell (SCell) activation/deactivation MAC CE with four octet Cᵢ field is identified by a MAC subheader with an eLCID. It's size is variable, contains thirty one C fields, one R field and several TRS ID fields, as shown in FIG. 4. If a MAC entity configures a secondary cell with *SCellIndex* i, a Cᵢ field indicates an activation/deactivation state of the secondary cell *SCellIndex* i, otherwise the MAC entity will ignore the Cᵢ field. The Cᵢ field set to be 1 indicates that the secondary cell *SCellIndex* i will be activated, and one TRS IDⱼ of the secondary cell will be included. The Cᵢ field set to be 0 indicates that the secondary cell *SCellIndex* i will be deactivated, and a TRS ID of the secondary cell is not included. TRS IDⱼ corresponds to the ith SCell that should be activated according to Cᵢ in ascending order of *SCellIndex* of the SCell, the corresponding Cᵢ is set to 1. If a TRS configuration id in TRS IDⱼ is set to a non-zero value, it indicates that a TRS address corresponding to *scellActivationRS id* is activated. If a TRS configuration id in TRS IDⱼ is set to 0, it indicates that no TRS is used for a corresponding SCell. In addition, R is a reserved bit, its value defaults to 0.

In the current Specification, as for a configuration of the secondary cell *sCellState,* it is described as follows:

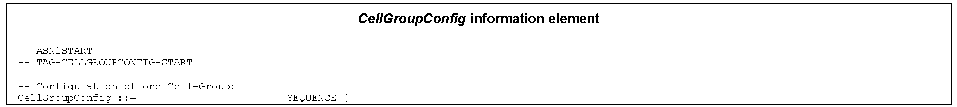

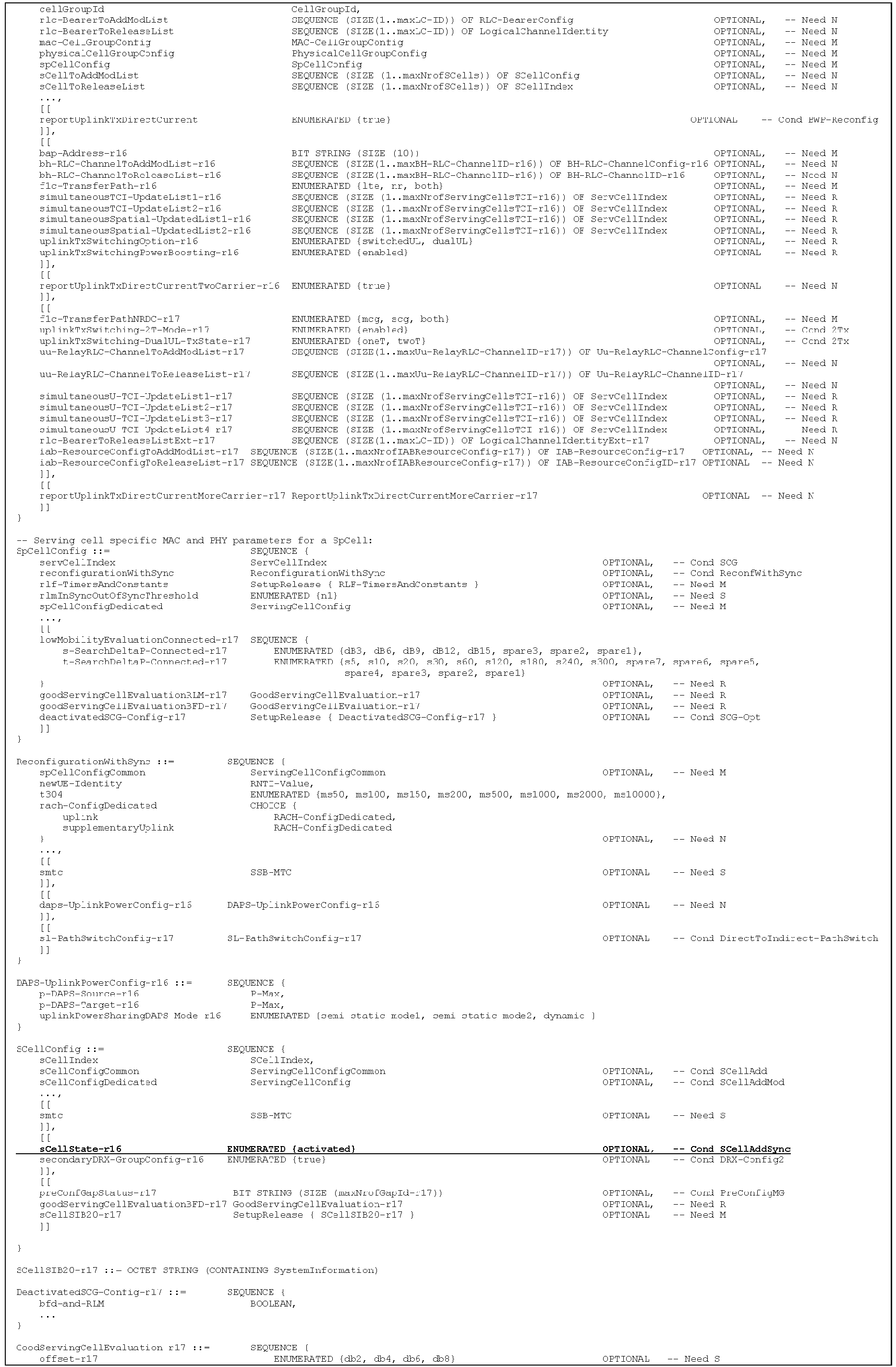

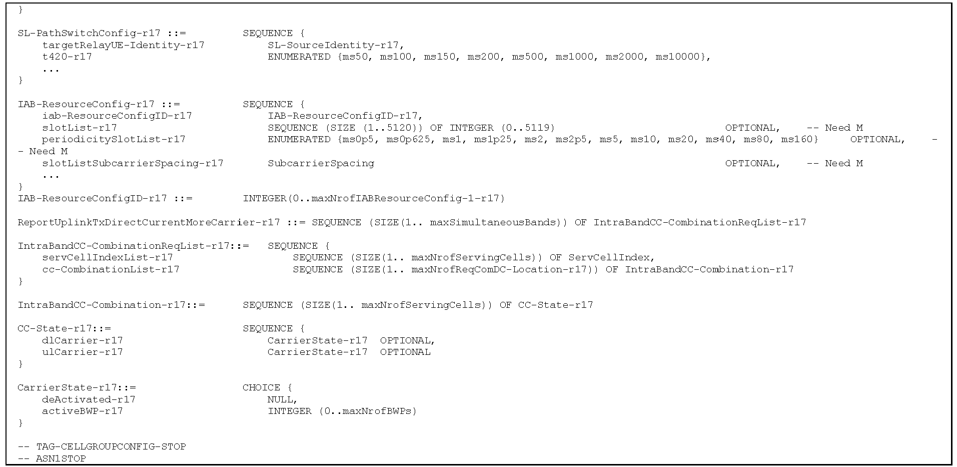

As for *sCellState,* it is described in the current specification as follows:

| |
|---|
| ***sCellState*** |
| Indicates whether the SCell shall be considered to be in activated state upon SCell configuration. If the field is included for an SCell configured with TRS for fast activation of the SCell, such TRS is not used for the corresponding SCell. |

In the current Specification, as for a configuration of the secondary cell *sCellDeactivationTimer* timer, it is described as follows:

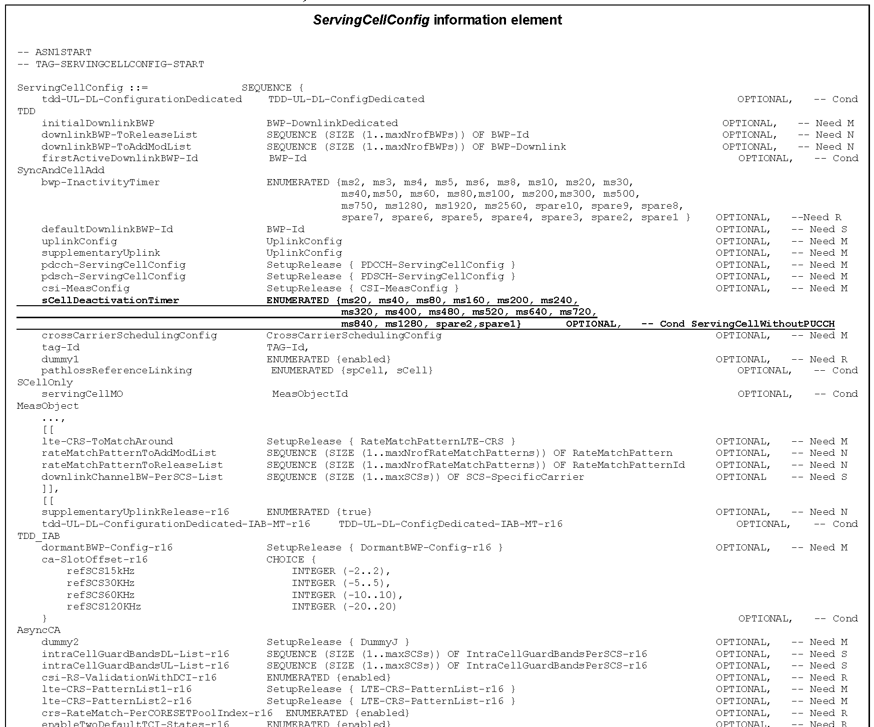

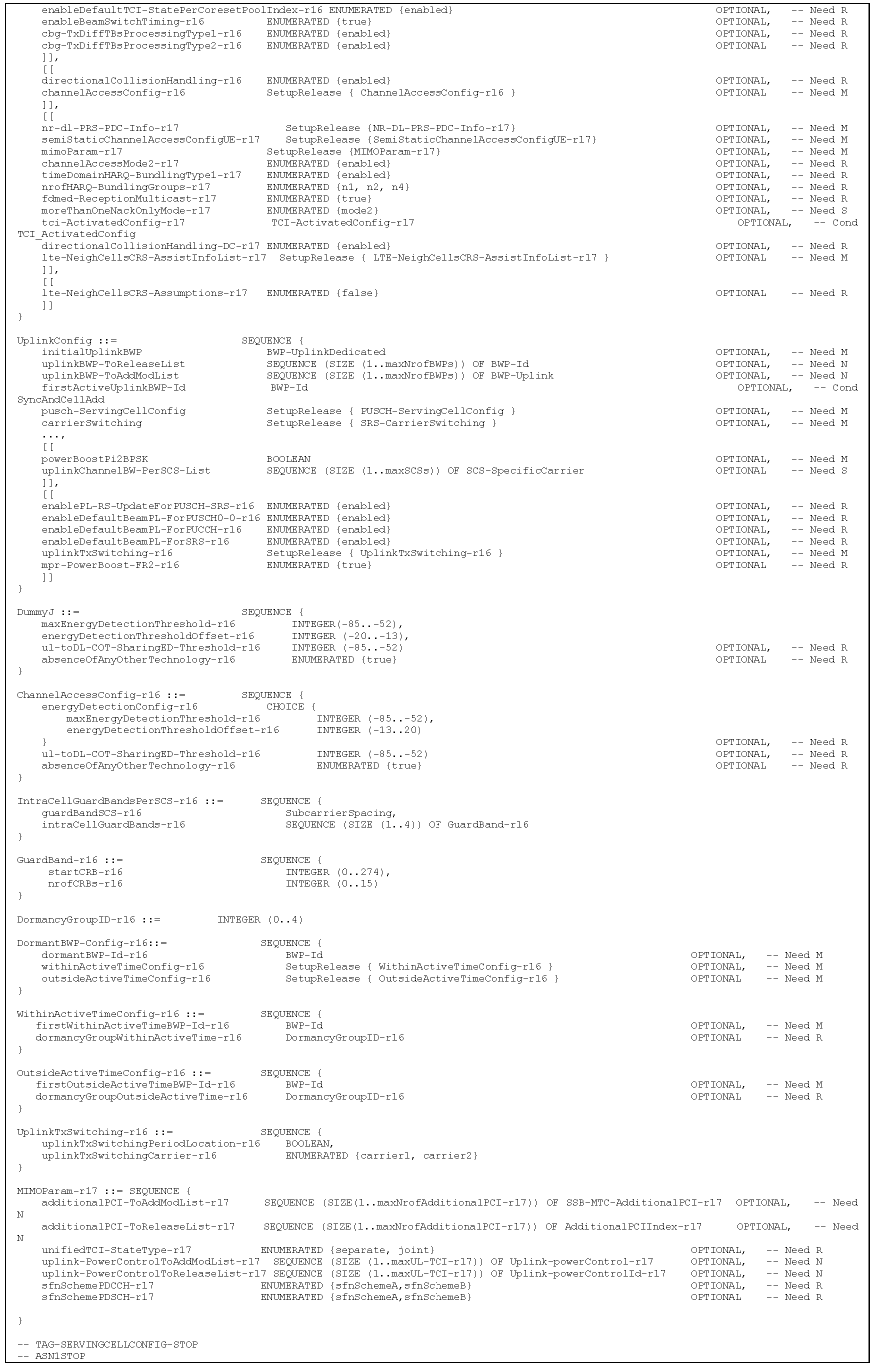

As for *sCellDeactivationTimer,* it is described in the current Specification as follows:

| |
|---|
| ***sCellDeactivationTimer*** |
| SCell deactivation timer in TS 38.321 [3]. If the field is absent, the UE applies the value infinity. |

In addition, in the current Specification, as for delay requirements for activation/deactivation of a secondary cell, the following situations are included:
SCell activation delay requirements for deactivated Scells (with multiple downlink Scells);
SCell deactivation delay requirements for activated Scells (with multiple downlink Scells);
direct SCell activation (of multiple downlink Scells) at SCells additon;
direct SCell activation (of multiple downlink Scells) at handover;
direct SCell activation (of multiple downlink Scells) at RRCResume;
SCell activation delay requirementsfor deactivated PUCCH Scells (with multiple Scells);
SCell deactivation delay requirements for activated PUCCH Scells(with multiple Scells);
fast SCell activation delay requirements for deactivated Scells.

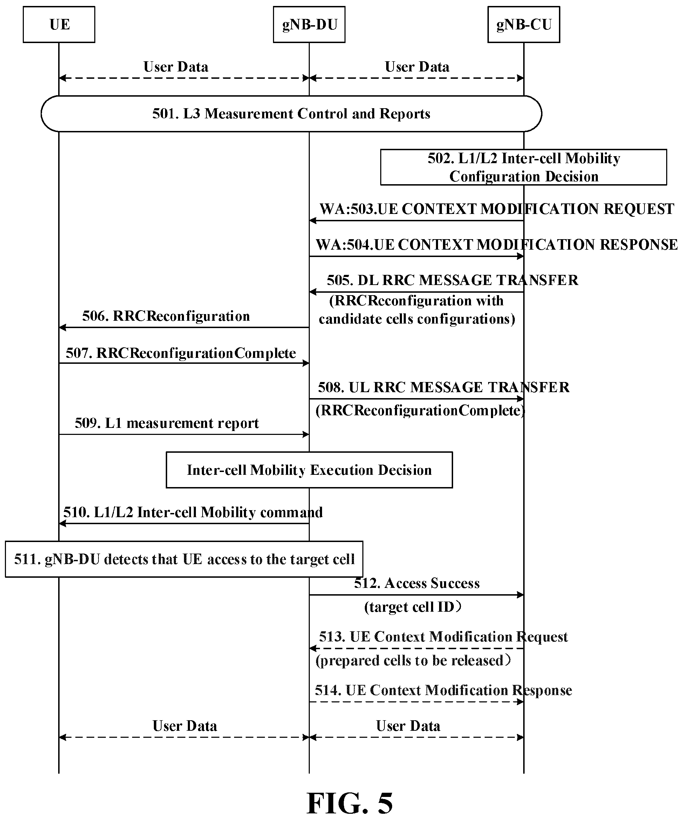

FIG. 5 is a schematic diagram of an intra-gNB-DU L1/L2 triggered mobility procedure. As shown in FIG. 5, for the L1/L2 triggered mobility (LTM), when a terminal moves within a gNB-DU, the process includes:
501: a UE transmits a *MeasurementReport* message including neighboring cell measurement to a gNB-DU. The gNB-DU transmits a UL RRC MESSAGE TRANSFER message carrying the received *MeasurementReport* message to a gNB-CU;
502: the gNB-CU decides to initiate a configuration of L1/L2 inter-cell mobility;
503: it is assumed that the gNB-CU transmits a UE CONTEXT MODIFICATION REQUEST message to the gNB-DU to include a target candidate cell;
504: it is assumed that if a request of configuring L1/L2 inter-cell mobility is accepted, the gNB-DU responds a UE CONTEXT MODIFICATION RESPONSE message, including a generated and agreed lower-layer RRC configuration of a candidate cell;
505: the gNB-CU transmits a DL RRC MESSAGE TRANSFER messages to the gNB-DU, including a generated RRCReconfiguration message carrying L1/L2 inter-cell mobility configuration;
506: the gNB-DU transfers the received *RRCReconfiguration* message to the UE;
507: the UE responds a *RRCReconfigurationComplete* message to the gNB-DU;
508: the gNB-DU transfers the *RRCReconfigurationComplete* message to the gNB-CU via the UL RRC MESSAGE TRANSFER message;
509: the UE transmits an L1 measurement result to the gNB-DU; and the gNB-DU decides to perform L1/L2 inter-cell mobility;
510: the gNB-DU transmits an L1/L2 inter-cell mobility command to the UE;
511: the gNB-DU detects that the UE has accessed to a cell;
512: the gNB-DU indicates the gNB-CU that the UE has successfully accessed to a target cell via an Access Success message; including a target cell ID;
513: the gNB-CU transmits a UE Context Modification message to the gNB-DU to release prepared cell resources;
514: the gNB-DU responds 1 a UE CONTEXT MODIFICATION RESPONSE message.

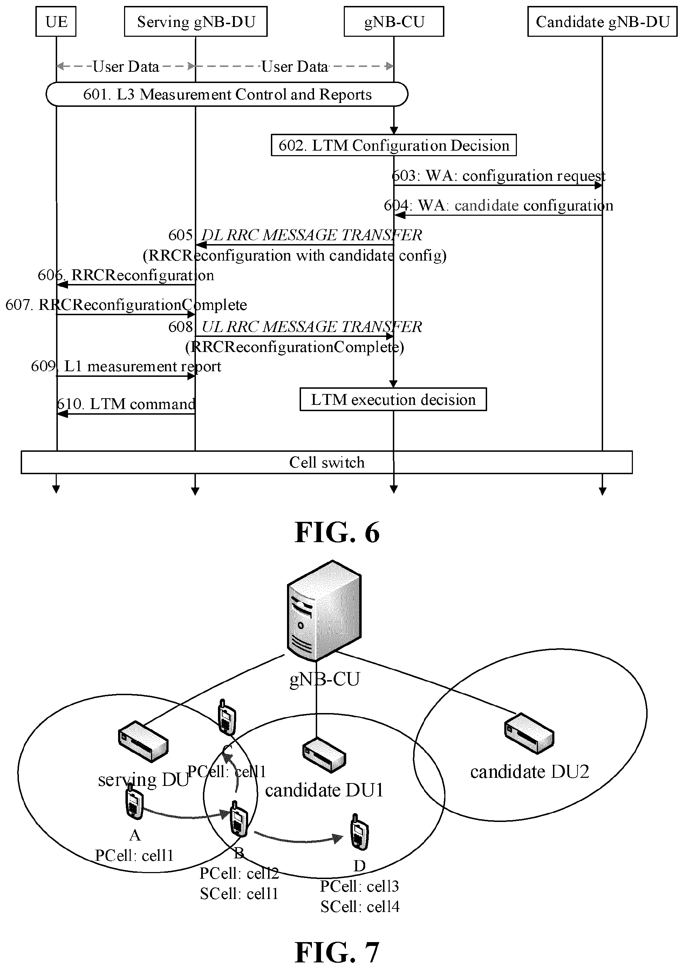

FIG. 6 is a schematic diagram of an inter-gNB-DU L1/L2 triggered mobility procedure. As shown in FIG. 6, for the LTM, when a terminal moves between different gNB-DUs, for example, the LTM procedure from a serving gNB-DU to a candidate gNB-DU includes:
601: a UE transmits a *MeasurementReport* message including neighboring cell measurement to a serving gNB-DU. The serving gNB-DU transmits a UL RRC MESSAGE TRANSFER message carrying the received *MeasurementReport* message to a gNB-CU;
602: the gNB-CU decides to initiate a configuration of L1/L2 inter-cell mobility;
603: the gNB-CU transmits an F1 message to a candidate gNB-DU to include a target candidate cell;
604: if a request of configuring L1/L2 inter-cell mobility is accepted, the candidate gNB-DU responds an F1 message, including a generated and agreed lower-layer RRC configuration of a candidate cell;
605: the gNB-CU transmits a DL RRC MESSAGE TRANSFER messages to the serving gNB-DU, including a generated RRCReconfiguration message carrying L1/L2 inter-cell mobility configuration;
606: the serving gNB-DU transfers the received *RRCReconfiguration* message to the UE;
607: the UE responds a *RRCReconfigurationComplete* message to the serving gNB-DU;
608: the serving gNB-DU transfers the *RRCReconfigurationComplete* message to the gNB-CU via the UL RRC MESSAGE TRANSFER message;
609: the UE transmits an L1 measurement result to the serving gNB-DU; and the serving gNB-DU decides to perform L1/L2 inter-cell mobility;
610: the serving gNB-DU transmits an L1/L2 inter-cell mobility command to the UE.

The inventor finds that the L1/L2 triggered mobility, an activation/deactivation state of a cell needs to be determined. Thereby, the present disclosure is proposed.

In the embodiments of the present disclosure, scenarios supported by the L1/L2-based inter-cell mobility include: an inter-DU scenario, an intra-DU scenario, a handover scenario, a CA scenario, a NR-DC scenario, and an inter-frequency scenario, etc.

The handover scenario refers to mobility/change of a PCell, relates to a non-CA scenario (i.e. PCell only) and a CA scenario (i.e. PCell and SCell(s)), including: a target PCell/target SCell(s) is/are not a current serving cell (i.e., a CA →CA scenario in which a PCell changes), such as the LTM from B to D in the scenario shown in FIG. 7; the target PCell is a current SCell, such as the LTM from B to C in the scenario shown in FIG. 7; and the target SCell is a current PCell, such as the LTM from A to B in the scenario shown in FIG. 7.

Moreover, for the CA scenario, a PCell change without a SCell change and a PCell change with a SCell change are supported. For the NR-DC scenario, a scenario of a PSCell change (i.e., intra-SN) without involving a MN is supported. For the inter-frequency scenario, mobility to an inter-frequency cell that is not a current serving cell is included.

In the above scenarios, the source cell and the target cell may be synchronous or asynchronous, and may operate on FR1 or FR2.

The embodiments of the present disclosure are described below in conjunction with the drawings and the specific implementations.

In the following description, without causing confusion, "if..." may be replaced with "in a case where" or "when...", "L1/L2 inter-cell mobility command" and "LTM (L1/L2 triggered mobility) command" and "cell change command" may be interchangeable.

### Embodiments of a first aspect

Embodiments of the present disclosure provide a method for cell activation or deactivation, which is described from a terminal equipment side.

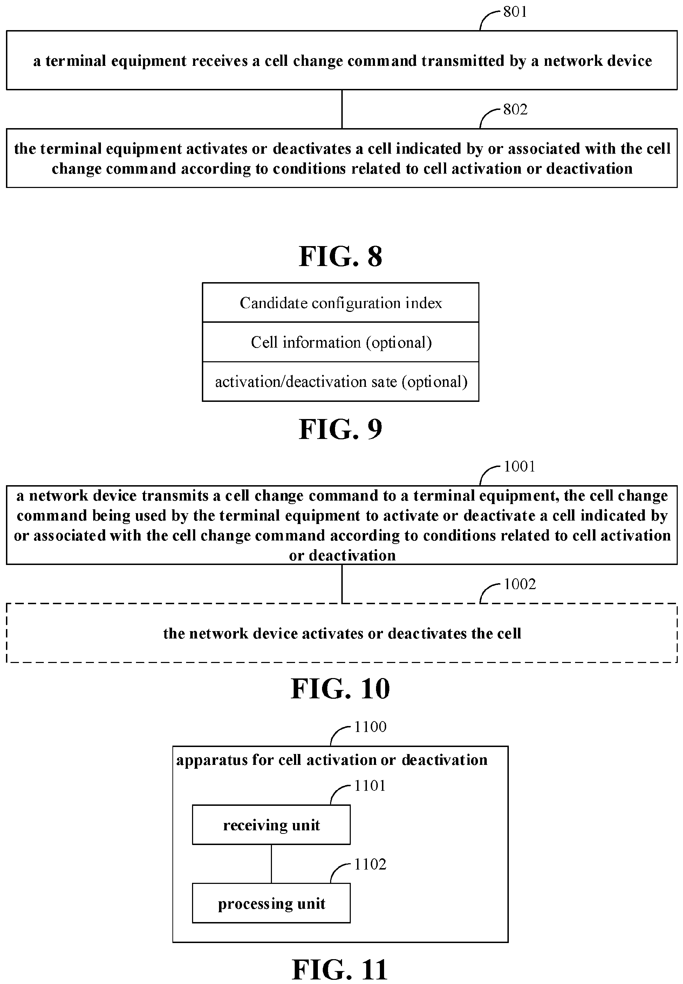

FIG. 8 is a schematic diagram of a method for cell activation or deactivation in the embodiments of the present disclosure. As shown in FIG. 8, the method includes:
801: a terminal equipment receives a cell change command transmitted by a network device; and
802: the terminal equipment activates or deactivates a cell indicated by or associated with the cell change command according to conditions related to cell activation or deactivation.

It should be noted that the above FIG. 8 only schematically describes the embodiments of the present disclosure, but the present disclosure is not limited to this. For example, other some operations can be increased or operations therein may be reduced. Persons skilled in the art may make appropriate modifications according to the above contents, not limited to the records in the above FIG. 8.

According to the embodiments of the present disclosure, the terminal equipment activates or deactivates a cell indicated by or associated with the cell change command according to conditions related to cell activation or deactivation, thereby a cell activation / deactivation state can be determined.

In the above embodiments, the cell change command may be a cell switch command or a cell change command or a cell mobility command. For example, the cell change command may be an L2 command that carries an index of a candidate configuration, from a network device, such as a cell switch MAC CE. The present disclosure is not limited to this, the cell change command may be others.

In some embodiments, the cell change command includes an index of a candidate configuration, and the cell change command indicates an activation or deactivation state of a cell corresponding to the index of the candidate configuration.

For example, if an activation or deactivation state of a cell corresponding to the index of the candidate configuration is 0, it is indicated that a state of the cell corresponding to the index of the candidate configuration is activated. If an activation or deactivation state of a cell corresponding to the index of the candidate configuration is 1, it is indicated that a state of the cell corresponding to the index of the candidate configuration is deactivated.

For another example, if an activation or deactivation state of a cell corresponding to the index of the candidate configuration is 0, it is indicated that a state of the cell corresponding to the index of the candidate configuration is deactivated. If an activation or deactivation state of a cell corresponding to the index of the candidate configuration is 1, it is indicated that a state of the cell corresponding to the index of the candidate configuration is activated.

In some embodiments, a state of a cell may be determined according to whether the cell change command includes cell information corresponding to the cell.

For example, when the cell change command includes the cell information corresponding to the cell, it is indicated that the state of the cell is activated, and/or, when the cell change command does not include the cell information corresponding to the cell, it is indicated that the state of the cell is deactivated.

For another example, when the cell change command includes the cell information corresponding to the cell, it is indicated that the state of the cell is deactivated, and/or, when the cell change command does not include the cell information corresponding to the cell, it is indicated that the state of the cell is activated.

In some embodiments, the cell indicated by the cell change command may be a cell corresponding to cell information included in the cell change command. The cell information may be included in the cell change command. The cell information may be a cell ID, such as PCI, NCGI, or may be a cell index, such as a cell index or PCI index in a candidate configuration, and so on.

In some embodiments, the cell associated with the cell change command may be a cell associated with an index of a candidate configuration included in the cell change command.

In the embodiments of the present disclosure, the network device may be a source gNB-DU of a terminal equipment, or may be a serving gNB-DU of the terminal equipment, the present disclosure is not limited to this.

In some embodiments, the conditions related to cell activation or deactivation include: the cell change command is received.

In the above embodiments, the terminal equipment may activate a cell when receiving a cell change command for activating the cell. For example, if, before the cell change command is received, the cell is a deactivated cell (such as a deactivated serving cell) or a candidate target cell (such as a cell included in a candidate configuration, i.e., a candidate target cell), the terminal equipment activates the cell when receiving the cell change command. That is, the cell changes from a deactivation or candidate state or a non-serving state to an activation state.

In the above embodiments, the terminal equipment may deactivate a cell when receiving a cell change command for deactivating the cell. For example, if, before the cell change command is received, the cell is an activated cell (such as an activated serving cell) or a candidate target cell (such as a cell included in a candidate configuration, i.e., a candidate target cell), the terminal equipment deactivates the cell when receiving the cell change command. That is, the cell changes from an activation or candidate state or a non-serving state to a deactivation state.

In some embodiments, the conditions related to cell activation or deactivation include: a secondary cell activation/deactivation MAC CE or an enhanced secondary cell activation/deactivation MAC CE is received.

In the above embodiments, the terminal equipment may activate the cell when receiving the secondary cell activation/deactivation MAC CE or the enhanced secondary cell activation/deactivation MAC CE and the MAC CE indicates to active the cell. For example, if, before the cell change command is received, the cell is a deactivated cell (such as a deactivated serving cell) or a candidate cell (such as a cell included in a candidate configuration, i.e., a candidate target cell), the terminal equipment activates the cell when receiving the MAC CE that indicates to active the cell. That is, the cell changes from a deactivation or candidate state to an activation state.

In the above embodiments, the terminal equipment may deactivate the cell when receiving the secondary cell activation/deactivation MAC CE or the enhanced secondary cell activation/deactivation MAC CE and the MAC CE indicates to deactivate the cell. For example, if, before the cell change command is received, the cell is an activated cell (such as an activated serving cell) or a candidate cell (such as a cell included in a candidate configuration, i.e., a candidate target cell), the terminal equipment deactivates the cell when receiving the MAC CE that indicates to deactivate the cell. That is, the cell changes from an activation or candidate state to a deactivation state.

FIG. 9 is a schematic diagram of an example of the MAC CE. As shown in FIG. 9, the MAC CE includes a candidate configuration index, cell information (optional), and an activation or deactivation state (optional).

In some embodiments, the conditions related to cell activation or deactivation include: an activation or deactivation state of a cell configured by RRC signaling.

In some implementations, the terminal equipment may activate the cell when the state of the cell configured by RRC signaling is an activation state. In addition, the terminal equipment may further activate the cell when receiving the cell change command. For example, if RRC signaling configures cell to be activated, the terminal equipment activates the cell when receiving the cell change command.

In some embodiments, the cell change command includes the cell; and/or, the cell change command indicates that the cell is a secondary cell. For example, if the cell change command includes the cell and/or the cell change command indicates that the cell is a secondary cell, then if RRC signaling configures cell to be activated, the terminal equipment activates the cell or activates the cell when receiving the cell change command.

In some embodiments, the cell change command includes an index of a candidate configuration, the candidate configuration including cell state information with a value being activated or deactivated. For example, if RRC signaling configures cell to be activated, that is, the candidate configuration includes cell state information, the value is activation, the terminal equipment activates the cell or activates the cell when receiving the cell change command.

In some embodiments, the cell change command includes an index of a candidate configuration, the candidate configuration including cell state information or not including cell state information. The terminal equipment may decide whether to activate the cell or whether to activate the cell when receiving the cell change command according to whether the candidate configuration includes cell state information.

For example, when the candidate configuration includes cell state information, the state configured by the RRC signaling is deactivation. When the candidate configuration does not include cell state information, the state configured by the RRC signaling is activation. That is, if RRC signaling configures cell to be activated, that is, the candidate configuration does not include cell state information, the terminal equipment activates the cell or activates the cell when receiving the cell change command.

For another example, when the candidate configuration includes cell state information, the state configured by the RRC signaling is activation. When the candidate configuration does not include cell state information, the state configured by the RRC signaling is deactivation. That is, if RRC signaling configures cell to be activated, that is, the candidate configuration includes cell state information, the value is activation, the terminal equipment activates the cell or activates the cell when receiving the cell change command.

In some other implementations, the terminal equipment deactivates the cell when the state of the cell configured by RRC signaling is a deactivation state. In addition, the terminal equipment may further deactivate the cell when receiving the cell change command. For example, if RRC signaling configures cell to be deactivated, the terminal equipment deactivates the cell when receiving the cell change command.

In some embodiments, the cell change command includes the cell; and/or, the cell change command indicates that the cell is a secondary cell. For example, if the cell change command includes the cell and/or the cell change command indicates that the cell is a secondary cell, then if RRC signaling configures cell to be deactivated, the terminal equipment deactivates the cell or deactivates the cell when receiving the cell change command.

In some embodiments, the cell change command includes an index of a candidate configuration, the candidate configuration including cell state information with a value being activation or deactivation. For example, if RRC signaling configures cell to be deactivated, that is, the candidate configuration includes cell state information, the value is deactivation, the terminal equipment deactivates the cell or deactivates the cell when receiving the cell change command.

In some embodiments, the cell change command includes an index of a candidate configuration, the candidate configuration including cell state information or not including cell state information. The terminal equipment may decide whether to deactivate the cell or whether to deactivate the cell when receiving the cell change command according to whether the candidate configuration includes cell state information.

For example, when the candidate configuration includes the cell state information, the state configured by the RRC signaling is deactivation; when the candidate configuration does not include the cell state information, the state configured by the RRC signaling is activation. That is, if RRC signaling configures cell to be deactivated, that is, the candidate configuration includes cell state information, the value is deactivation, the terminal equipment deactivates the cell or deactivates the cell when receiving the cell change command.

For another example, when the candidate configuration includes the cell state information, the state configured by the RRC signaling is activation; when the candidate configuration does not include the cell state information, the state configured by the RRC signaling is deactivation. That is, if RRC signaling configures cell to be deactivated, that is, the candidate configuration does not include cell state information, the terminal equipment deactivates the cell or deactivates the cell when receiving the cell change command.

In some embodiments, the conditions related to cell activation or deactivation include: an activation or deactivation state of a cell group where a cell is located configured by RRC signaling.

In some implementations, the terminal equipment may activate the cell when the state of the cell group configured by RRC signaling is an activation state. In addition, the terminal equipment may further activate the cell when receiving the cell change command. For example, if RRC signaling configures cell group where a cell is located to be activated, the terminal equipment activates the cell when receiving the cell change command.

In some embodiments, the cell change command includes the cell group where the cell is located; and/or, the cell change command indicates that the cell group where the cell is located is a secondary cell group. For example, if the cell change command includes the cell group where the cell is located and/or the cell change command indicates that the cell group where the cell is located is a secondary cell group, then if RRC signaling configures cell group where the cell is located to be activated, the terminal equipment activates the cell or activates the cell when receiving the cell change command.

In some embodiments, the cell change command includes an index of a candidate configuration, the candidate configuration including cell group state information with a value being activation or deactivation. For example, if RRC signaling configures cell group where a cell is located to be activated, that is, the candidate configuration includes cell group state information, the value is activation, the terminal equipment activates the cell or activates the cell when receiving the cell change command.

In some embodiments, the cell change command includes an index of a candidate configuration, the candidate configuration including cell group state information or not including cell group state information. The terminal equipment may decide whether to activate the cell or whether to activate the cell when receiving the cell change command according to whether the candidate configuration includes cell group state information.

For example, when the candidate configuration includes the cell group state information, the state configured by the RRC signaling is deactivation; when the candidate configuration does not include the cell group state information, the state configured by the RRC signaling is activation. That is, if RRC signaling configures cell group where a cell is located to be activated, that is, the candidate configuration does not include cell group state information, the terminal equipment activates the cell or activates the cell when receiving the cell change command.

For another example, when the candidate configuration includes the cell group state information, the state configured by the RRC signaling is activation; when the candidate configuration does not include the cell group state information, the state configured by the RRC signaling is deactivation. That is, if RRC signaling configures cell group where a cell is located to be activated, that is, the candidate configuration includes cell group state information, the value is activation, the terminal equipment activates the cell or activates the cell when receiving the cell change command.

In some other implementations, the terminal equipment deactivates the cell when the state of the cell group configured by RRC signaling is a deactivation state. In addition, the terminal equipment may further deactivate the cell when receiving the cell change command. For example, if RRC signaling configures cell group where a cell is located to be deactivated, the terminal equipment deactivates the cell when receiving the cell change command.

In some embodiments, the cell change command includes the cell group where the cell is located; and/or, the cell change command indicates that the cell group where the cell is located is a secondary cell group. For example, if the cell change command includes the cell group where the cell is located and/or the cell change command indicates that the cell group where the cell is located is a secondary cell group, then if RRC signaling configures cell group where a cell is located to be deactivated, the terminal equipment deactivates the cell or deactivates the cell when receiving the cell change command.

In some embodiments, the cell change command includes an index of a candidate configuration, the candidate configuration including cell group state information with a value being activation or deactivation. For example, if RRC signaling configures cell group where a cell is located to be deactivated, that is, the candidate configuration includes cell group state information, the value is deactivation, the terminal equipment deactivates the cell or deactivates the cell when receiving the cell change command.

In some embodiments, the cell change command includes an index of a candidate configuration, the candidate configuration including cell group state information or not including cell group state information. The terminal equipment may decide whether to deactivate the cell or whether to deactivate the cell when receiving the cell change command according to whether the candidate configuration includes cell group state information.

For example, when the candidate configuration includes the cell group state information, the state configured by the RRC signaling is deactivation; when the candidate configuration does not include the cell group state information, the state configured by the RRC signaling is activation. That is, if RRC signaling configures cell group where a cell is located to be deactivated, that is, the candidate configuration includes cell group state information, the value is deactivation, the terminal equipment deactivates the cell or deactivates the cell when receiving the cell change command.

For another example, when the candidate configuration includes the cell group state information, the state configured by the RRC signaling is activation; when the candidate configuration does not include the cell group state information, the state configured by the RRC signaling is deactivation. That is, if RRC signaling configures cell group where a cell is located to be deactivated, that is, the candidate configuration does not include cell group state information, the terminal equipment deactivates the cell or deactivates the cell when receiving the cell change command.

In some embodiments, the conditions related to cell activation or deactivation include: a state of a secondary cell deactivation timer.

In the above embodiments, the terminal equipment may activate or deactivate the cell according to a state of a secondary cell deactivation timer.

For example, if a secondary cell deactivation timer associated with an activated secondary cell expires, the secondary cell is deactivated. That is, the secondary cell changes from an activation state to a deactivation state.

For another example, if a secondary cell deactivation timer associated with an activated secondary cell is running, the secondary cell is activated. That is, the secondary cell changes from an activation state to a state of being activated again.

In the embodiments of the present disclosure, that the terminal equipment activates the cell may include at least one of the following operations:
respectively activating a UL BWP (Uplink Bandwidth Part) and a DL BWP (Downlink Bandwidth Part) configured by RRC signaling or indicated by a cell change command;
activating SRS transmission on the cell;
activating CSI reporting of the cell;
activating PDCCH monitoring of the cell;
activating PDCCH monitoring on the cell;
activating PUCCH transmission on the cell, if the PUCCH transmission is configured;
starting or restarting a secondary cell deactivation timer associated with the cell;
initializing a suspended and configured uplink grant of configured grant Type 1 associated with the cell, if the uplink grant exists;
triggering a PHR (Power Headroom Report);
triggering a BSR (Buffer Status Report); and
initiating a RACH.

The above are just examples for description, the present disclosure is not limited to this, that the terminal equipment activates the cell may further includes performing conventional operations, relevant technologies may be referred to, description is omitted here.

In the embodiments of the present disclosure, that the terminal equipment deactivate the cell may include at least one of the following operations:
not transmitting a SRS on the cell, unless a condition is satisfied;
not reporting CSI of the cell, unless a condition is satisfied;
not transmitting a UL-SCH on the cell;
not transmitting a RACH on the cell, unless a condition is satisfied;
not monitoring a PDCCH on the cell;
not monitoring a PDCCH of the cell, unless a condition is satisfied; and
not transmitting a PUCCH on the cell.

In the above embodiments, the conditions may include at least one of the following:
the cell is included in a candidate configuration carried by the cell change command;
a network device indicates allowed; and
a network device triggers.

The above are just examples for description, the present disclosure is not limited to this, that the terminal equipment deactivates the cell may further include performing conventional operations, relevant technologies may be referred to, description is omitted here.

In some embodiments, in a case where the cell is configured as a candidate cell, the terminal equipment may perform at least one of the following operations on the cell, including but not limited to:
SRS transmission on the cell;
CSI reporting of the cell;
PDCCH monitoring of the cell;
PUCCH transmission on the cell;
initializing a suspended and configured uplink grant of configured grant Type 1 associated with the cell, if any.

In the above embodiments, the network device may indicate or trigger the above behaviors.

In some embodiments, the terminal equipment may activate the cell in a slot receiving an activation indication. For example, when the cell changes from a deactivation state to an activation state, the terminal equipment may activate the cell in a slot receiving an activation indication.

In some embodiments, the terminal equipment may activate the cell within a time T after the slot receiving the activation indication. For example, when the cell changes from a candidate state to an activation state, the terminal equipment may activate the cell within a time T after the slot receiving the activation indication.

In the above embodiments, if the cell is a secondary cell, the time T at least includes application delay of TA (timing advance) on a special cell in a cell group where the cell is located.

In the above embodiments, if the cell is a primary secondary cell, the time T at least includes application delay of TA on the cell.

In each of the above embodiments, the time T does not include at least one of an RRC processing delay, a delay for obtaining a valid TA command, and a time reported by CSI.

In some embodiments, the terminal equipment may deactivate the cell in a slot receiving a deactivation indication. For example, in a case where a cell changes from an activation state to a deactivation state, or in a case where a cell changes from a candidate state to a deactivation state, the terminal equipment may deactivate the cell in a slot receiving a deactivation indication.

In the above embodiments, the activation/deactivation indications are, for example, information included in the preceding commands for activating/deactivating a cell, which is not described here.

In order to make the method in the embodiments of the present disclosure more clear and understandable, the method in the embodiments of the present disclosure is described below through examples.

Embodiment 1: the cell is not a current serving cell.

In this example, it is assumed that cell 1 is included in a candidate configuration and is not a current serving cell.

If cell 1 is a secondary cell in a MCG, the following situations may exist according to the method in the embodiments of the present disclosure:
Situation 1: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 2: LTM command includes a candidate configuration index that indicates or is associated with cell 1 and includes information of cell 1. After receiving the LTM command, a terminal equipment activates/deactivates cell 1 based on an indication of the LTM command.
Situation 3: LTM command includes a candidate configuration index that indicates or is associated with cell 1 and includes activation/deactivation state information of cell 1. After receiving the LTM command, a terminal equipment activates/deactivates cell 1 based on an indication of the LTM command.

Moreover, if cell 1 is a secondary cell in a SCG, the following situations may exist according to the method in the embodiments of the present disclosure:
Situation 4: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 5: activation/deactivation states of a cell group where cell 1 is located is indicated in a candidate configuration included in RRC signaling; LTM command includes a candidate configuration index that indicates or is associated with cell 1. After receiving the LTM command, a terminal equipment activates/deactivates cell 1 based on an indication of the candidate configuration.
Situation 6: LTM command includes a candidate configuration index that indicates or is associated with cell 1 and includes information of cell 1. After receiving the LTM command, a terminal equipment activates/deactivates cell 1 based on an indication of the LTM command.
Situation 7: LTM command includes a candidate configuration index that indicates or is associated with cell 1 and includes activation/deactivation state information of cell 1. After receiving the LTM command, a terminal equipment activates/deactivates cell 1 based on an indication of the LTM command.

Embodiment 2: the cell is a current special cell.

In this example, it is assumed that the special cell is included in a candidate configuration as a candidate cell.

If the special cell is a primary cell, the following situations may exist according to the method in the embodiments of the present disclosure:
Situation 8: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 9: LTM command includes a candidate configuration index that indicates or is associated with cell 1 and includes information of cell 1. After receiving the LTM command, a terminal equipment activates/deactivates cell 1 based on an indication of the LTM command.
Situation 10: LTM command includes a candidate configuration index that indicates or is associated with cell 1 and includes activation/deactivation state information of cell 1. After receiving the LTM command, a terminal equipment activates/deactivates cell 1 based on an indication of the LTM command.

Moreover, if the special cell is a primary secondary cell and a SCG is deactivated, the following situations may exist according to the method in the embodiments of the present disclosure:
Situation 11: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 12: LTM command includes a candidate configuration index that indicates or is associated with cell 1 and includes information of cell 1. After receiving the LTM command, a terminal equipment activates/deactivates cell 1 based on an indication of the LTM command.
Situation 13: LTM command includes a candidate configuration index that indicates or is associated with cell 1 and includes activation/deactivation state information of cell 1. After receiving the LTM command, a terminal equipment activates/deactivates cell 1 based on an indication of the LTM command.

Embodiment 3: the cell is a current activated secondary cell.

In this example, it is assumed that the secondary cell is included in a candidate configuration as a candidate cell.

If the candidate configuration is included in RRC signaling, the following situations may exist according to the method in the embodiments of the present disclosure:
Situation 14: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 15: LTM command includes a candidate configuration index that indicates or is associated with cell 1 and includes information of cell 1. After receiving the LTM command, a terminal equipment activates/deactivates cell 1 based on an indication of the LTM command.
Situation 16: LTM command includes a candidate configuration index that indicates or is associated with cell 1 and includes activation/deactivation state information of cell 1. After receiving the LTM command, a terminal equipment activates/deactivates cell 1 based on an indication of the LTM command.
Situation 17: LTM command includes a candidate configuration index that indicates or is associated with cell 1. After receiving the LTM command, a terminal equipment activates/deactivates based on a state of a deactivation timer associated with the cell.

Embodiment 4: the cell is a current deactivated secondary cell.

In this example, it is assumed that the secondary cell is included in a candidate configuration as a candidate cell.

If the candidate configuration is included in RRC signaling, the following situations may exist according to the method in the embodiments of the present disclosure:
Situation 18: activation/deactivation states of cell 1 is indicated in a candidate configuration included in RRC signaling. LTM command includes a candidate configuration index that indicates or is associated with cell 1. After receiving the LTM command, a terminal equipment activates/deactivates cell 1 based on an indication of the candidate configuration.
Situation 19: LTM command includes a candidate configuration index that indicates or is associated with cell 1 and includes information of cell 1. After receiving the LTM command, a terminal equipment activates/deactivates cell 1 based on an indication of the LTM command.
Situation 20: LTM command includes a candidate configuration index that indicates or is associated with cell 1 and includes activation/deactivation state information of cell 1. After receiving the LTM command, a terminal equipment activates/deactivates cell 1 based on an indication of the LTM command.
Situation 20: LTM command includes a candidate configuration index that indicates or is associated with cell 1. After receiving the LTM command, a terminal equipment activates/deactivates cell 1 based on a state of a deactivation timer associated with the cell.

Each of the above embodiments is only exemplary description of the method in the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the terminal equipment activates or deactivates a cell indicated by or associated with a cell change command when receiving the cell change command, or when receiving a (enhanced) secondary cell activated or deactivated MAC CE, or according to an activation or deactivation state of a cell configured by RRC signaling, or according to an activation or deactivation state of a cell group where a cell is located configured by RRC signaling, or according to a deactivation timer, which can determine an activation or deactivation state of the cell. Thereby, it is allowed to perform data transmission by using the secondary cell as soon as possible after a cell changes, thus ensuring big data communication.

### Embodiments of a second aspect

Embodiments of the present disclosure provide a method for cell activation or deactivation, which is described from a network side. The contents same as the embodiments of the first aspect are not repeated again.

FIG. 10 is a schematic diagram of a method for cell activation or deactivation in the embodiments of the present disclosure. As shown in FIG. 10, the method includes:
1001: a network device transmits a cell change command to a terminal equipment, the cell change command being used by the terminal equipment to activate or deactivate a cell indicated by or associated with the cell change command according to conditions related to cell activation or deactivation.

According to the embodiments of the present disclosure, a network device transmits a cell change command to a terminal equipment, so that the terminal equipment activates or deactivates a cell indicated by or associated with the cell change command according to conditions related to cell activation or deactivation. It facilitates the terminal equipment to determine activation/deactivation states of the cell. Thereby, it is allowed to perform data transmission by using the secondary cell between a terminal and a network as soon as possible after a cell changes, thus ensuring big data communication.

In some embodiments, as shown in FIG. 10, the method further includes:
1002: the network device activates or deactivates the cell.

According to the embodiments of the present disclosure, after transmitting the cell change command, the network device activates or deactivates a cell indicated by or associated with the cell change command. Thereby, it is allowed to perform data transmission by using the secondary cell as soon as possible after a cell change, thus ensuring big data communication.

It should be noted that the above FIG. 10 only schematically describes the embodiments of the present disclosure, but the present disclosure is not limited to this. For example, other some operations can be increased or operations therein may be reduced. Persons skilled in the art may make appropriate modifications according to the above contents, not limited to the records in the above FIG. 10.

In some embodiments, the network device transmits a secondary cell activation/deactivation MAC CE or an enhanced secondary cell activation/deactivation MAC CE to the terminal equipment, the MAC CE being used for the terminal equipment to activate or deactivate the cell indicated by or associated with the cell change command. Operations of the terminal equipment have been described in the embodiments of the first aspect, its contents are incorporated here and are not repeated here.

In some embodiments, the network device transmits RRC signaling to the terminal equipment, the RRC signaling configures an activation or deactivation state of a cell or an activation or deactivation state of a cell group where the cell is located, the state of the cell or the state of the cell group being used for the terminal equipment to activate or deactivate the cell indicated by or associated with the cell change command. Operations of the terminal equipment have been described in the embodiments of the first aspect, its contents are incorporated here and are not repeated here.

In some embodiments, the network device may further configure a value of a deactivation timer of a cell for the terminal equipment. The present disclosure does not limit a specific configuration mode, and relevant technologies may be referred to. The state of the deactivation timer of the cell is used for the terminal equipment to activate or deactivate the cell indicated by or associated with the cell change command. Operations of the terminal equipment have been described in the embodiments of the first aspect, its contents are incorporated here and are not repeated here.

In some embodiments, that the network device activates the cell includes at least one of the following:
receiving SRS transmission on the cell;
receiving CSI reporting of the cell;
transmitting a PDCCH on the cell;
receiving PUCCH transmission on the cell;
receiving a PHR;
receiving a BSR;
receiving a RACH.

In some embodiments, that the network device deactivates the cell includes at least one of the following:
not receiving an SRS on the cell;
not receiving CSI of the cell;
not receiving a UL-SCH on the cell;
not receiving a RACH on the cell;
not transmitting a PDCCH on the cell; and
not receiving a PUCCH on the cell.

The above activation and deactivation operations are just examples for description, the present disclosure is not limited to this, the network device may further perform other conventional cell activation or deactivation operations, relevant technologies may be referred to, description is omitted here.

In some embodiments, that the network device may further indicate the terminal equipment to deactivate the cell includes at least one of the following:
transmitting an SRS on the cell;
reporting CSI of the cell;
transmitting a UL-SCH on the cell;
transmitting a RACH on the cell;
monitoring a PDCCH on the cell;
monitoring a PDCCH of the cell; and
transmitting a PUCCH on the cell.

In some embodiments, that the network device may further trigger the terminal equipment to perform at least one of the following when deactivating the cell:
transmitting an SRS on the cell;
reporting CSI of the cell;
transmitting a UL-SCH on the cell;
transmitting a RACH on the cell;
monitoring a PDCCH on the cell;
monitoring a PDCCH of the cell; and
transmitting a PUCCH on the cell.

In some embodiments, the network device activates the cell within a time T after the slot transmitting the activation indication.

If the cell is a secondary cell, the time T at least includes application delay of TA on a special cell in a cell group where the cell is located.

If the cell is a primary secondary cell, the time T at least includes application delay of TA on the cell.

In some embodiments, the time T does not include at least one of an RRC processing delay, a delay for obtaining a valid TA command, and a time reported by CSI.

In the embodiments of the present disclosure, the network device is a source gNB-DU or a serving gNB-DU of the terminal equipment, the present disclosure is not limited to this.

Each of the above embodiments is only exemplary description of the method in the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, a network device transmits a cell change command to a terminal equipment, so that the terminal equipment activates or deactivates a cell indicated by or associated with the cell change command according to conditions related to cell activation or deactivation. It facilitates the terminal equipment to determine activation/deactivation states of the cell. Thereby, it is allowed to perform data transmission by using the secondary cell between a terminal and a network as soon as possible after a cell changes, thus ensuring big data communication.

### Embodiments of a third aspect

Embodiments of the present disclosure provide an apparatus for cell activation or deactivation. The apparatus may, for example, be a terminal equipment, or may be one or more parts or components configured in the terminal equipment. The apparatus in the embodiments of the present disclosure corresponds to the method in the embodiments of the first aspect, the contents same as those in the embodiments of the first aspect are not repeated.

FIG. 11 is a schematic diagram of an apparatus for cell activation or deactivation in the embodiments of the present disclosure, as shown in FIG. 11, the apparatus 1100 includes:
a receiving unit 1101 configured to receive a cell change command transmitted by a network device; and
a processing unit 1102 configured to activate or deactivate a cell indicated by or associated with the cell change command according to conditions related to cell activation or deactivation.

In some embodiments, the conditions related to cell activation or deactivation include: the cell change command is received.

In some embodiments, the processing unit 1102 activates the cell when the receiving unit 1101 receives the cell change command for activating the cell.

In the above embodiments, before the receiving unit 1101 receives the cell change command, the cell is a deactivated cell or a candidate cell.

In some embodiments, the processing unit 1102 deactivates the cell when the receiving unit 1101 receives the cell change command for deactivating the cell.

In the above embodiments, before the receiving unit 1101 receives the cell change command, the cell is an activated cell or a candidate cell.

In some embodiments, the conditions related to cell activation or deactivation include: a secondary cell activation/deactivation MAC CE or an enhanced secondary cell activation/deactivation MAC CE is received.

In some embodiments, the processing unit 1102 activates the cell when the receiving unit 1101 receives the secondary cell activation/deactivation MAC CE or the enhanced secondary cell activation/deactivation MAC CE and the MAC CE indicates to activate the cell.

In the above embodiments, before the receiving unit 1101 receives the cell change command, the cell is a deactivated cell or a candidate cell.

In some embodiments, the processing unit 1102 deactivates the cell when the receiving unit 1101 receives the secondary cell activation/deactivation MAC CE or the enhanced secondary cell activation/deactivation MAC CE and the MAC CE indicates to deactivate the cell.

In the above embodiments, before the receiving unit 1101 receives the cell change command, the cell is an activated cell or a candidate cell.

In some embodiments, the conditions related to cell activation or deactivation include: an activation or deactivation state of a cell configured by RRC signaling.

In some embodiments, the processing unit 1102 activates the cell when the state of the cell configured by RRC signaling is an activation state.

In the above embodiments, in some implementations, the processing unit 1102 activates the cell when the receiving unit 1101 receives the cell change command. That is, if the state of the cell configured by the RRC signaling is an activation state, the processing unit 1102 activates the cell when the receiving unit 1101 receives the cell change command.

In some embodiments, the processing unit 1102 deactivates the cell when the state of the cell configured by RRC signaling is a deactivation state.

In the above embodiments, in some implementations, the processing unit 1102 deactivates the cell when the receiving unit 1101 receives the cell change command. That is, if the state of the cell configured by the RRC signaling is a deactivation state, the processing unit 1102 deactivates the cell when the receiving unit 1101 receives the cell change command.

In some embodiments, the cell change command includes the cell; and/or, the cell change command indicates that the cell is a secondary cell.

In some embodiments, the cell change command includes an index of a candidate configuration, the candidate configuration including cell state information with a value being activation or deactivation.

In some embodiments, the cell change command includes an index of a candidate configuration, the candidate configuration including cell state information or not including cell state information.

In some implementations, when the candidate configuration includes the cell state information, the state configured by the RRC signaling is deactivation; when the candidate configuration does not include the cell state information, the state configured by the RRC signaling is activation.

In some other implementations, when the candidate configuration includes the cell state information, the state configured by the RRC signaling is activation; when the candidate configuration does not include the cell state information, the state configured by the RRC signaling is deactivation.

In some embodiments, the conditions related to cell activation or deactivation include: an activation or deactivation state of a cell group where a cell is located configured by RRC signaling.

In some embodiments, the processing unit 1102 activates the cell when the state of the cell group configured by RRC signaling is an activation state.

In the above embodiments, in some implementations, the processing unit 1102 activates the cell when the receiving unit 1101 receives the cell change command. That is, if the state of the cell group configured by the RRC signaling is an activation state, the processing unit 1102 activates the cell when the receiving unit 1101 receives the cell change command.

In some embodiments, the processing unit 1102 deactivates the cell when the state of the cell group configured by RRC signaling is a deactivation state.

In the above embodiments, in some implementations, the processing unit 1102 deactivates the cell when the receiving unit 1101 receives the cell change command. That is, if the state of the cell group configured by the RRC signaling is a deactivation state, the processing unit 1102 deactivates the cell when the receiving unit 1101 receives the cell change command.

In some embodiments, the cell change command includes the cell group where the cell is located; and/or, the cell change command indicates that the cell group where the cell is located is a secondary cell group.

In some embodiments, the cell change command includes an index of a candidate configuration, the candidate configuration including cell group state information with a value being activation or deactivation.

In some embodiments, the cell change command includes an index of a candidate configuration, the candidate configuration including cell group state information or not including cell group state information.

In some implementations, when the candidate configuration includes the cell group state information, the state configured by the RRC signaling is deactivation; when the candidate configuration does not include the cell group state information, the state configured by the RRC signaling is activation.

In some other implementations, when the candidate configuration includes the cell group state information, the state configured by the RRC signaling is activation; when the candidate configuration does not include the cell group state information, the state configured by the RRC signaling is deactivation.

In some embodiments, the conditions related to cell activation or deactivation include: a state of a secondary cell deactivation timer; the processing unit 1102 activates or deactivates the cell according to the state of the secondary cell deactivation timer.

For example, if a secondary cell deactivation timer associated with an activated secondary cell expires, the processing unit 1102 deactivates the secondary cell.

For another example, if a secondary cell deactivation timer associated with an activated secondary cell is running, the processing unit 1102 activates the secondary cell.

In the embodiments of the present disclosure, that the processing unit 1102 activates the cell includes at least one of the following:
respectively activating a UL BWP and a DL BWP configured by RRC signaling or indicated by the cell change command;
activating SRS transmission on the cell;
activating CSI reporting of the cell;
activating PDCCH monitoring of the cell;
activating PDCCH monitoring on the cell;
activating PUCCH transmission on the cell, if the PUCCH transmission is configured;
starting or restarting a secondary cell deactivation timer associated with the cell;
initializing a suspended and configured uplink grant of configured grant Type 1 associated with the cell, if the uplink grant exists;
triggering a PHR;
triggering a BSR; and
initiating a RACH.

In the embodiments of the present disclosure, that the processing unit 1102 deactivates the cell includes at least one of the following:
not transmitting a SRS on the cell, unless a condition is satisfied;
not reporting CSI of the cell, unless a condition is satisfied;
not transmitting a UL-SCH on the cell;
not transmitting a RACH on the cell, unless a condition is satisfied;
not monitoring a PDCCH on the cell;
not monitoring a PDCCH of the cell, unless a condition is satisfied; and
not transmitting a PUCCH on the cell.

In some embodiments, the condition includes at least one of the following:
the cell is included in a candidate configuration carried by the cell change command;
a network device indicates allowed; and
a network device triggers.

In some embodiments, the processing unit 1102 activates the cell in a slot receiving an activation indication.

In some embodiments, the processing unit 1102 activates the cell within a time T after the slot receiving the activation indication.

In some implementations, if the cell is a secondary cell, the time T at least includes application delay of TA on a special cell in a cell group where the cell is located.

In some implementations, if the cell is a primary secondary cell, the time T at least includes application delay of TA on the cell.

In some embodiments, the time T does not include at least one of an RRC processing delay, a delay for obtaining a valid TA command, and a time reported by CSI.

In some embodiments, the processing unit 1102 deactivates the cell in a slot receiving a deactivation indication.

In the embodiments of the present disclosure, the network device is a source gNB-DU or a serving gNB-DU of the terminal equipment. The present disclosure is not limited to this.

In the embodiments of the present disclosure, the cell change command is a cell switch command or a cell change command or a cell mobility command. The present disclosure is not limited to this.

In the embodiments of the present disclosure, the cell indicated by the cell change command is a cell corresponding to cell information included in the cell change command.

In the embodiments of the present disclosure, the cell associated with the cell change command is a cell associated with an index of a candidate configuration included in the cell change command.

In some embodiments, the cell change command includes an index of a candidate configuration; the cell change command indicates an activation or deactivation state of a cell corresponding to the index of the candidate configuration.

In some implementations, if the activation or deactivation state of the cell corresponding to the index of the candidate configuration is 0, the state of the cell corresponding to the index of the candidate configuration is indicated to be activated; if the activation or deactivation state of the cell corresponding to the index of the candidate configuration is 1, the state of the cell corresponding to the index of the candidate configuration is indicated to be deactivated.

In some other implementations, if the activation or deactivation state of the cell corresponding to the index of the candidate configuration is 0, the state of the cell corresponding to the index of the candidate configuration is indicated to be deactivated; if the activation or deactivation state of the cell corresponding to the index of the candidate configuration is 1, the state of the cell corresponding to the index of the candidate configuration is indicated to be activated.

In some embodiments, when the cell change command includes the cell information corresponding to the cell, the state of the cell is indicated to be activated; when the cell change command does not include the cell information corresponding to the cell, the state of the cell is indicated to be deactivated.

In some embodiments, when the cell change command includes the cell information corresponding to the cell, the state of the cell is indicated to be deactivated; when the cell change command does not include the cell information corresponding to the cell, the state of the cell is indicated to be activated.

In some embodiments, the cell change command further includes cell information corresponding to the index of the candidate configuration.

Embodiments of the present disclosure provide an apparatus for cell activation or deactivation. The apparatus may, for example, be a network device, or may be one or more parts or components configured in the network device. The apparatus in the embodiments of the present disclosure corresponds to the method in the embodiments of the second aspect, the contents same as those in the embodiments of the second aspect are not repeated.

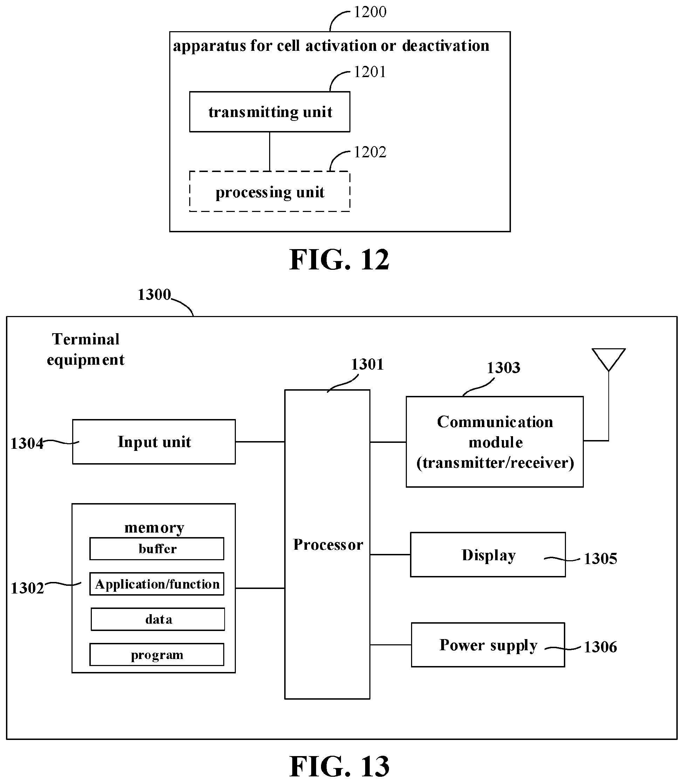

FIG. 12 is a schematic diagram of an apparatus for cell activation or deactivation in the embodiments of the present disclosure. As shown in FIG. 12, the apparatus 1200 includes:
a transmitting unit 1201 configured to transmit a cell change command to a terminal equipment, the cell change command being used by the terminal equipment to activate or deactivate a cell indicated by or associated with the cell change command according to conditions related to cell activation or deactivation.

In some embodiments, as shown in FIG. 12, the apparatus 1200 further includes:
a processing unit 1202 configured to activate or deactivate the cell.

In some embodiments, the transmitting unit 1201 further transmits a secondary cell activation/deactivation MAC CE or an enhanced secondary cell activation/deactivation MAC CE to the terminal equipment, the MAC CE being used for the terminal equipment to activate or deactivate the cell indicated by or associated with the cell change command.

In some embodiments, the transmitting unit 1201 further transmits RRC signaling to the terminal equipment, the RRC signaling configures an activation or deactivation state of a cell or an activation or deactivation state of a cell group, the state of the cell or the state of the cell group being used for the terminal equipment to activate or deactivate the cell indicated by or associated with the cell change command.

In some embodiments, that the processing unit 1202 activates the cell includes at least one of the following:
receiving SRS transmission on the cell;
receiving CSI reporting of the cell;
transmitting a PDCCH on the cell;
receiving PUCCH transmission on the cell;
receiving a PHR;
receiving a BSR;
receiving a RACH.

In some embodiments, that the processing unit 1202 deactivates the cell includes at least one of the following:
not receiving an SRS on the cell;
not receiving CSI of the cell;
not receiving a UL-SCH on the cell;
not receiving a RACH on the cell;
not transmitting a PDCCH on the cell; and
not receiving a PUCCH on the cell.

In some embodiments, that the processing unit 1202 may further indicate the terminal equipment to deactivate the cell includes at least one of the following:
transmitting an SRS on the cell;
reporting CSI of the cell;
transmitting a UL-SCH on the cell;
transmitting a RACH on the cell;
monitoring a PDCCH on the cell;
monitoring a PDCCH of the cell; and
transmitting a PUCCH on the cell.

In some embodiments, that the processing unit 1202 may further trigger the terminal equipment to perform at least one of the following when deactivating the cell:
transmitting an SRS on the cell;
reporting CSI of the cell;
transmitting a UL-SCH on the cell;
transmitting a RACH on the cell;
monitoring a PDCCH on the cell;
monitoring a PDCCH of the cell; and
transmitting a PUCCH on the cell.

In some embodiments, the processing unit 1202 activates the cell within a time T after the slot transmitting the activation indication.

In some implementations, if the cell is a secondary cell, the time T at least includes application delay of TA on a special cell in a cell group where the cell is located.

In some implementations, if the cell is a primary secondary cell, the time T at least includes application delay of TA on the cell.

In some embodiments, the time T does not include at least one of an RRC processing delay, a delay for obtaining a valid TA command, and a time reported by CSI.

In the embodiments of the present disclosure, the network device is a source gNB-DU or a serving gNB-DU of the terminal equipment. The present disclosure is not limited to this.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatus for cell activation or deactivation in the embodiments of the present disclosure may further include other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the embodiments of the present disclosure, the terminal equipment activates or deactivates a cell indicated by or associated with a cell change command when receiving the cell change command, or when receiving a (enhanced) secondary cell activated or deactivated MAC CE, or according to an activation or deactivation state of a cell configured by RRC signaling, or according to an activation or deactivation state of a cell group where a cell is located configured by RRC signaling, or according to a deactivation timer, which can determine an activation or deactivation state of the cell. Thereby, it is allowed to perform data transmission by using the secondary cell as soon as possible after a cell changes, thus ensuring big data communication.

### Embodiments of a fourth aspect

Embodiments of the present disclosure further provide a communication system, including a network device and a terminal equipment.

In some embodiments, the terminal equipment includes the apparatus shown in FIG. 11 in the embodiments of the third aspect, configured to perform the method in the embodiments of the first aspect. Since each method has been described in details in the embodiments of the first aspect, its contents are incorporated here and are not repeated.

In the embodiments of the present disclosure, the network device includes the apparatus shown in FIG. 12 in the embodiments of the third aspect, configured to perform the method in the embodiments of the second aspect. Since each method has been described in details in the embodiments of the second aspect, its contents are incorporated here and are not repeated. In addition, the network device performs normal operations of a network device, and the network device may further perform operations corresponding to the operations of the terminal equipment, for example the network device receives information/signals from the terminal equipment, and/or the network device transmits information/signals to the terminal equipment, descriptions are omitted here.

The embodiments of the present disclosure further provide a terminal equipment, the terminal equipment for example may be a UE, but the present disclosure is not limited to this, it may also be other terminal equipment.

FIG. 13 is a schematic diagram of a terminal equipment in the embodiments of the present disclosure. As shown in FIG. 13, the terminal equipment 1300 may include a processor 1301 and a memory 1302; the memory 1302 stores data and programs, and is coupled to the processor 1301. It's worth noting that this figure is exemplary; other types of structures may also be used to supplement or replace this structure, so as to realize a telecommunication function or other functions.

In some embodiments, functions of the apparatus 1100 in the embodiments of the third aspect may be integrated into the processor 1301, wherein the processor 1201 may be configured to execute a program to implement the method as described in the embodiments of the first aspect, the contents of which are incorporated herein and are not described repeatedly here.

In some other embodiments, the apparatus 1100 in the embodiments of the third aspect may be configured separately from the processor 1301, for example the apparatus 1100 in the embodiments of the third aspect may be configured as a chip connected to the processor 1301, functions of the apparatus 1100 in the embodiments of the third aspect are realized through the control of the processor 1301.

As shown in FIG. 13, the terminal equipment 1300 may further include: a communication module 1303, an input unit 1304, a display 1305 and a power supply 1306. The functions of said components are similar to related arts, which are not repeated here. It's worth noting that the terminal equipment 1300 does not have to include all the components shown in FIG. 13, said components are not indispensable. Moreover, the terminal equipment 1300 may also include components not shown in FIG. 13, relevant technologies can be referred to.

Embodiments of the present disclosure further provide a network device, the network device for example may be a base station, but the present disclosure is not limited to this, it may also be other network device.

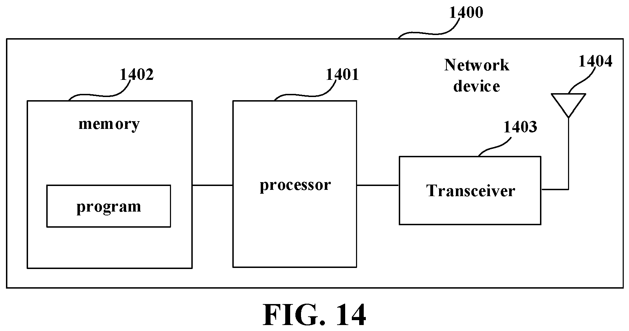

FIG. 14 is a composition schematic diagram of a network device in the embodiments of the present disclosure. As shown in FIG. 14, the network device 1400 may include: a processor 1401 and a memory 1402; the memory 1402 is coupled to the processor 1401. The memory 1402 may store various data; moreover, also stores a program for information processing, and executes the program under the control of the processor 1401.

In some embodiments, functions of the apparatus 1200 in the embodiments of the third aspect may be integrated into the processor 1401, wherein the processor 1401 may be configured to execute a program to implement the method as described in the embodiments of the second aspect, the contents of which are incorporated herein and are not described repeatedly here.

In some other embodiments, the apparatus 1200 in the embodiments of the third aspect may be configured separately from the processor 1401, for example the apparatus 1200 in the embodiments of the third aspect may be configured as a chip connected to the processor 1401, functions of the apparatus 1200 in the embodiments of the third aspect are realized through the control of the processor 1401.

In addition, as shown in FIG. 14, the network device 1400 may further include: transceivers 1403 and 1404. The functions of said components are similar to related arts, which are not repeated here. It's worth noting that the network device 1400 does not have to include all the components shown in FIG. 14. Moreover, the network device 1400 may also include components not shown in FIG. 14, relevant arts can be referred to.

The embodiments of the present disclosure further provide a computer program, wherein when a terminal equipment executes the program, the program enables the terminal equipment to execute the method described in the embodiments of the first aspect.

The embodiments of the present disclosure further provide a storage medium in which a computer program is stored, wherein the computer program enables a terminal equipment to execute the method described in the embodiments of the first aspect.

The embodiments of the present disclosure further provide a computer program, wherein when a network device executes the program, the program enables the network device to execute the method described in the embodiments of the second aspect.

The embodiments of the present disclosure further provide a storage medium in which a computer program is stored, wherein the computer program enables a network device to execute the method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. A method for cell activation or deactivation, wherein the method comprises:
   a terminal equipment receives a cell change command transmitted by a network device; and
   the terminal equipment activates or deactivates a cell indicated by or associated with the cell change command according to conditions related to cell activation or deactivation.
2. The method according to Supplement 1, wherein
   the conditions related to cell activation or deactivation include: the cell change command is received.
3. The method according to Supplement 1 or 2, wherein
   the terminal equipment activates the cell when receiving a cell change command for activating the cell.
4. The method according to Supplement 1 or 2, wherein
   the terminal equipment deactivates the cell when receiving a cell change command for deactivating the cell.
5. The method according to Supplement 1, wherein
   the conditions related to cell activation or deactivation include: a secondary cell activation/deactivation MAC CE or an enhanced secondary cell activation/deactivation MAC CE is received.
6. The method according to Supplement 1 or 5, wherein
   the terminal equipment activates the cell when receiving the secondary cell activation/deactivation MAC CE or the enhanced secondary cell activation/deactivation MAC CE and the MAC CE indicates to activate the cell.
7. The method according to Supplement 1 or 5, wherein
   the terminal equipment deactivates the cell when receiving the secondary cell activation/deactivation MAC CE or the enhanced secondary cell activation/deactivation MAC CE and the MAC CE indicates to deactivate the cell.
8. The method according to Supplement 3 or 6, wherein
   before receiving the cell change command, the cell is a deactivated cell or a candidate cell.
9. The method according to Supplement 4 or 7, wherein
   before receiving the cell change command, the cell is an activated cell or a candidate cell.
10. The method according to Supplement 1, wherein
   the conditions related to cell activation or deactivation include: an activation or deactivation state of a cell configured by RRC signaling.
11. The method according to Supplement 1 or 10, wherein
   the terminal equipment activates the cell when the state of the cell configured by RRC signaling is an activation state.
12. The method according to Supplement 11, wherein
   the terminal equipment activates the cell when receiving the cell change command.
13. The method according to Supplement 1 or 10, wherein
   the terminal equipment deactivates the cell when the state of the cell configured by RRC signaling is a deactivation state.
14. The method according to Supplement 13, wherein
   the terminal equipment deactivates the cell when receiving the cell change command.
15. The method according to any one of Supplements 10 to 14, wherein
   the cell change command includes the cell; and/or,
   the cell change command indicates that the cell is a secondary cell.
16. The method according to any one of Supplements 10 to 14, wherein
   the cell change command includes an index of a candidate configuration;
   the candidate configuration including cell state information with a value being activation or deactivation.
17. The method according to any one of Supplements 10 to 14, wherein
   the cell change command includes an index of a candidate configuration;
   the candidate configuration including cell state information or not including cell state information.
18. The method according to Supplement 17, wherein
   when the candidate configuration includes the cell state information, the state configured by the RRC signaling is deactivation; and
   when the candidate configuration does not include the cell state information, the state configured by the RRC signaling is activation.
19. The method according to Supplement 17, wherein
   when the candidate configuration includes the cell state information, the state configured by the RRC signaling is activation; and
   when the candidate configuration does not include the cell state information, the state configured by the RRC signaling is deactivation.
20. The method according to Supplement 1, wherein
   the conditions related to cell activation or deactivation include: an activation or deactivation state of a cell group where a cell is located configured by RRC signaling.
21. The method according to Supplement 1 or 20, wherein
   the terminal equipment activates the cell when the state of the cell group configured by RRC signaling is an activation state.
22. The method according to Supplement 21, wherein
   the terminal equipment activates the cell when receiving the cell change command.
23. The method according to Supplement 1 or 20, wherein
   the terminal equipment deactivates the cell when the state of the cell group configured by RRC signaling is a deactivation state.
24. The method according to Supplement 23, wherein
   the terminal equipment deactivates the cell when receiving the cell change command.
25. The method according to any one of Supplements 20 to 24, wherein
   the cell change command includes a cell group where the cell is located; and/or,
   the cell change command indicates that the cell group where the cell is located is a secondary cell group.
26. The method according to any one of Supplements 20 to 24, wherein
   the cell change command includes an index of a candidate configuration;
   the candidate configuration including cell group state information with a value being activation or deactivation.
27. The method according to any one of Supplements 20 to 24, wherein
   the cell change command includes an index of a candidate configuration;
   the candidate configuration including cell group state information or not including cell group state information.
28. The method according to Supplement 27, wherein
   when the candidate configuration includes the cell group state information, the state configured by the RRC signaling is deactivation; and
   when the candidate configuration does not include the cell group state information, the state configured by the RRC signaling is activation.
29. The method according to Supplement 27, wherein
   when the candidate configuration includes the cell group state information, the state configured by the RRC signaling is activation; and
   when the candidate configuration does not include the cell group state information, the state configured by the RRC signaling is deactivation.
30. The method according to Supplement 1, wherein
   the conditions related to cell activation or deactivation include: a state of a secondary cell deactivation timer; and
   the terminal equipment activates or deactivates the cell according to the state of the secondary cell deactivation timer.
31. The method according to Supplement 30, wherein
   if a secondary cell deactivation timer associated with an activated secondary cell expires, the secondary cell is deactivated.
32. The method according to Supplement 31, wherein
   if a secondary cell deactivation timer associated with an activated secondary cell is running, the secondary cell is activated.
33. The method according to any one of Supplements 1-32, wherein that the terminal equipment activates the cell comprises at least one of the following:
   respectively activating a UL BWP and a DL BWP configured by RRC signaling or indicated by the cell change command;
   activating SRS transmission on the cell;
   activating CSI reporting of the cell;
   activating PDCCH monitoring of the cell;
   activating PDCCH monitoring on the cell;
   activating PUCCH transmission on the cell, if the PUCCH transmission is configured;
   starting or restarting a secondary cell deactivation timer associated with the cell;
   initializing a suspended and configured uplink grant of configured grant Type 1 associated with the cell, if the uplink grant exists;
   triggering a PHR;
   triggering a BSR; and
   initiating a RACH.
34. The method according to any one of Supplements 1-32, wherein that the terminal equipment deactivates the cell comprises at least one of the following:
   not transmitting a SRS on the cell, unless a condition is satisfied;
   not reporting CSI of the cell, unless a condition is satisfied;
   not transmitting a UL-SCH on the cell;
   not transmitting a RACH on the cell, unless a condition is satisfied;
   not monitoring a PDCCH on the cell;
   not monitoring a PDCCH of the cell, unless a condition is satisfied; and
   not transmitting a PUCCH on the cell.
35. The method according to Supplement 34, wherein the condition includes at least one of the following:
   the cell is included in a candidate configuration carried by the cell change command;
   a network device indicates allowed; and
   a network device triggers.
36. The method according to any one of Supplements 1 to 32, wherein that the terminal equipment activates the cell comprises:
   the terminal equipment activates the cell in a slot receiving an activation indication; or,
   the terminal equipment activates the cell within a time T after the slot receiving the activation indication.
37. The method according to Supplement 36, wherein
   if the cell is a secondary cell, the time T at least includes application delay of TA on a special cell in a cell group where the cell is located.
38. The method according to Supplement 36, wherein
   if the cell is a primary secondary cell, the time T at least includes application delay of TA on the cell.
39. The method according to any one of Supplements 36 to 38, wherein
   the time T does not include at least one of an RRC processing delay, a delay for obtaining a valid TA command, and a time reported by CSI.
40. The method according to any one of Supplements 1 to 32, wherein that the terminal equipment deactivates the cell comprises:
   the terminal equipment deactivates the cell in a slot receiving a deactivation indication.
41. The method according to any one of Supplements 1 to 40, wherein
   the network device is a source gNB-DU or a serving gNB-DU of the terminal equipment.
42. The method according to any one of Supplements 1 to 40, wherein
   the cell change command is a cell switch command or a cell change command or a cell mobility command.
43. The method according to any one of Supplements 1 to 40, wherein
   the cell indicated by the cell change command is a cell corresponding to cell information included in the cell change command.
44. The method according to any one of Supplements 1 to 40, wherein
   the cell associated with the cell change command is a cell associated with an index of a candidate configuration included in the cell change command.
45. The method according to any one of Supplements 1 to 40, wherein
   the cell change command includes an index of a candidate configuration;
   the cell change command indicates an activation or deactivation state of a cell corresponding to the index of the candidate configuration.
46. The method according to Supplement 45, wherein
   if the activation or deactivation state of the cell corresponding to the index of the candidate configuration is 0, the state of the cell corresponding to the index of the candidate configuration is indicated to be activated; if the activation or deactivation state of the cell corresponding to the index of the candidate configuration is 1, the state of the cell corresponding to the index of the candidate configuration is indicated to be deactivated.
47. The method according to Supplement 45, wherein
   if the activation or deactivation state of the cell corresponding to the index of the candidate configuration is 0, the state of the cell corresponding to the index of the candidate configuration is indicated to be deactivated; if the activation or deactivation state of the cell corresponding to the index of the candidate configuration is 1, the state of the cell corresponding to the index of the candidate configuration is indicated to be activated.
48. The method according to Supplement 45, wherein
   when the cell change command includes the cell information corresponding to the cell, the state of the cell is indicated to be activated; when the cell change command does not include the cell information corresponding to the cell, the state of the cell is indicated to be deactivated.
49. The method according to Supplement 45, wherein
   when the cell change command includes the cell information corresponding to the cell, the state of the cell is indicated to be deactivated; when the cell change command does not include the cell information corresponding to the cell, the state of the cell is indicated to be activated.
50. The method according to Supplement 45, wherein
   the cell change command further includes cell information corresponding to the index of the candidate configuration.
51. A method for cell activation or deactivation, wherein the method comprises:
   a network device transmits a cell change command to a terminal equipment, the cell change command being used by the terminal equipment to activate or deactivate a cell indicated by or associated with the cell change command according to conditions related to cell activation or deactivation.
51a. The method according to Supplement 51, wherein the method further comprises:
   the network device activates or deactivates the cell.
52. The method according to Supplement 51, wherein the method further comprises:
   the network device transmits a secondary cell activation/deactivation MAC CE or an enhanced secondary cell activation/deactivation MAC CE to the terminal equipment, the MAC CE being used for the terminal equipment to activate or deactivate the cell indicated by or associated with the cell change command.
53. The method according to Supplement 51, wherein the method further comprises:
   the network device transmits RRC signaling to the terminal equipment, the RRC signaling configures an activation or deactivation state of a cell or an activation or deactivation state of a cell group where the cell is located, the state of the cell or the state of the cell group being used for the terminal equipment to activate or deactivate the cell indicated by or associated with the cell change command.
54. The method according to Supplement 51a, wherein that the network device activates the cell comprises at least one of the following:
   receiving SRS transmission on the cell;
   receiving CSI reporting of the cell;
   transmitting a PDCCH on the cell;
   receiving PUCCH transmission on the cell;
   receiving a PHR;
   receiving a BSR;
   receiving a RACH.
55. The method according to Supplement 51a, wherein that the network device deactivates the cell comprises at least one of the following:
   not receiving an SRS on the cell;
   not receiving CSI of the cell;
   not receiving a UL-SCH on the cell;
   not receiving a RACH on the cell;
   not transmitting a PDCCH on the cell; and
   not receiving a PUCCH on the cell.
55a. The method according to any one of Supplements 51 to 55, wherein the method further comprises:
   the network device indicates the terminal equipment to deactivate the cell, including at least one of the following:
   transmitting an SRS on the cell;
   reporting CSI of the cell;
   transmitting a UL-SCH on the cell;
   transmitting a RACH on the cell;
   monitoring a PDCCH on the cell;
   monitoring a PDCCH of the cell; and
   transmitting a PUCCH on the cell.
55b. The method according to any one of Supplements 51 to 55a, wherein the method further comprises:
   the network device triggers the terminal equipment to perform at least one of the following when deactivating the cell:
   transmitting an SRS on the cell;
   reporting CSI of the cell;
   transmitting a UL-SCH on the cell;
   transmitting a RACH on the cell;
   monitoring a PDCCH on the cell;
   monitoring a PDCCH of the cell; and
   transmitting a PUCCH on the cell.
56. The method according to any one of Supplements 51a to 54, wherein that the network device activates the cell comprises:
   activating the cell within a time T after the slot transmitting the activation indication.
57. The method according to Supplement 56, wherein
   if the cell is a secondary cell, the time T at least includes application delay of TA on a special cell in a cell group where the cell is located.
58. The method according to Supplement 56, wherein
   if the cell is a primary secondary cell, the time T at least includes application delay of TA on the cell.
59. The method according to Supplement 56, 57 or 58, wherein
   the time T does not include at least one of an RRC processing delay, a delay for obtaining a valid TA command, and a time reported by CSI.
60. The method according to any one of Supplements 51-59, wherein
   the network device is a source gNB-DU or a serving gNB-DU of the terminal equipment.
61. A terminal equipment, comprising a memory and a processor, the memory storing a computer program, and the processor being configured to execute the computer program to implement the method according to any one of Supplements 1 to 50.
62. A network device, comprising a memory and a processor, the memory storing a computer program, and the processor being configured to execute the computer program to implement the method according to any one of Supplements 51 to 60.
63. A communication system, comprising the network device according to Supplement 62 and the terminal equipment according to Supplement 61.

## Claims

1. An apparatus for cell activation or deactivation, configured in a terminal equipment, wherein the apparatus comprises:
a receiving unit configured to receive a cell change command transmitted by a network device; and
a processing unit configured to activate or deactivate a cell indicated by or associated with the cell change command according to conditions related to cell activation or deactivation.

2. The apparatus according to claim 1, wherein,
the conditions related to cell activation or deactivation include: the cell change command is received.

3. The apparatus according to claim 1, wherein,
the conditions related to cell activation or deactivation include: a secondary cell activation/deactivation media access control control element or an enhanced secondary cell activation/deactivation media access control control element is received.

4. The apparatus according to claim 1, wherein,
the conditions related to cell activation or deactivation include: an activation or deactivation state of a cell configured by radio resource control signaling.

5. The apparatus according to claim 1, wherein,
the conditions related to cell activation or deactivation include: an activation or deactivation state of a cell group where a cell is located configured by radio resource control signaling.

6. The apparatus according to claim 1, wherein,
the conditions related to cell activation or deactivation include: a state of a secondary cell deactivation timer; and
the terminal equipment activates or deactivates the cell according to the state of the secondary cell deactivation timer.

7. The apparatus according to claim 1, wherein, that the processing unit activates the cell comprises at least one of the following:
respectively activating an uplink bandwidth part and a downlink bandwidth part configured by radio resource control signaling or indicated by the cell change command;
activating sounding reference signal transmission on the cell;
activating channel state information reporting of the cell;
activating physical downlink control channel monitoring of the cell;
activating physical downlink control channel monitoring on the cell;
activating physical uplink control channel transmission on the cell, if the physical uplink control channel transmission is configured;
starting or restarting a secondary cell deactivation timer associated with the cell;
initializing a suspended and configured uplink grant of configured grant Type 1 associated with the cell, if the uplink grant exists;
triggering a power headroom report;
triggering a buffer status report; and
initiating a random access channel.

8. The apparatus according to claim 1, wherein, that the processing unit deactivates the cell comprises at least one of the following:
not transmitting a sounding reference signal on the cell, unless a condition is satisfied;
not reporting channel state information of the cell, unless a condition is satisfied;
not transmitting an uplink shared channel on the cell;
not transmitting a random access channel on the cell, unless a condition is satisfied;
not monitoring a physical downlink control channel on the cell;
not monitoring a physical downlink control channel of the cell, unless a condition is satisfied; and
not transmitting a physical uplink control channel on the cell.

9. The apparatus according to claim 8, wherein, the condition includes at least one of the following:
the cell is included in a candidate configuration carried by the cell change command;
a network device indicates allowed; and
a network device triggers.

10. The apparatus according to claim 1, wherein,
the processing unit activates the cell in a slot receiving an activation indication; or,
the processing unit activates the cell within a time T after the slot receiving the activation indication.

11. The apparatus according to claim 10, wherein,
if the cell is a secondary cell, the time T at least includes application delay of timing advance on a special cell in a cell group where the cell is located.

12. The apparatus according to claim 10, wherein,
if the cell is a primary secondary cell, the time T at least includes application delay of timing advance on the cell.

13. The apparatus according to claim 10, wherein,
the time T does not include at least one of radio resource control processing delay, delay for obtaining a valid timing advance command, and a time reported by channel state information.

14. The apparatus according to claim 1, wherein,
the processing unit deactivates the cell in a slot receiving a deactivation indication.

15. The apparatus according to claim 1, wherein,
the cell indicated by the cell change command is a cell corresponding to cell information included in the cell change command.

16. The apparatus according to claim 1, wherein,
the cell associated with the cell change command is a cell associated with an index of a candidate configuration included in the cell change command.

17. An apparatus for cell activation or deactivation, configured in a network device, wherein, the apparatus comprises:
a transmitting unit configured to transmit a cell change command to a terminal equipment, the cell change command being used by the terminal equipment to activate or deactivate a cell indicated by or associated with the cell change command according to conditions related to cell activation or deactivation.

18. The apparatus according to claim 17, wherein, the apparatus further comprises:
a processing unit configured to indicate the terminal equipment to deactivate the cell, including at least one of the following:
transmitting a sounding reference signal on the cell;
reporting channel state information of the cell;
transmitting an uplink shared channel on the cell;
transmitting a random access channel on the cell;
monitoring a physical downlink control channel on the cell;
monitoring a physical downlink control channel of the cell; and
transmitting a physical uplink control channel on the cell.

19. The apparatus according to claim 17, wherein, the apparatus further comprises:
a processing unit configured to trigger the terminal equipment to perform at least one of the following when deactivating the cell:
transmitting a sounding reference signal on the cell;
reporting channel state information of the cell;
transmitting an uplink shared channel on the cell;
transmitting a random access channel on the cell;
monitoring a physical downlink control channel on the cell;
monitoring a physical downlink control channel of the cell; and
transmitting a physical uplink control channel on the cell.

20. A communication system, comprising a network device and a terminal equipment, wherein,
the terminal equipment is configured to receive a cell change command transmitted by the network device, and to activate or deactivate a cell indicated by or associated with the cell change command according to conditions related to cell activation or deactivation; and/or,
the network device is configured to transmit a cell change command to the terminal equipment, the cell change command being used by the terminal equipment to activate or deactivate a cell indicated by or associated with the cell change command according to conditions related to cell activation or deactivation.
